Europäisches Patentamt

European Patent Office

Office européen des brevets

(11) Veröffentlichungsnummer: **0 346 728**
**A2**

(12) # EUROPÄISCHE PATENTANMELDUNG

(21) Anmeldenummer: 89110190.9

(22) Anmeldetag: 06.06.89

(51) Int. Cl.⁴: **C08F 218/04 , C09D 3/74 , C04B 24/26 , C04B 26/04**

(30) Priorität: 14.06.88 DE 3820154

(43) Veröffentlichungstag der Anmeldung:
20.12.89 Patentblatt 89/51

(84) Benannte Vertragsstaaten:
AT BE CH DE ES FR GB IT LI NL SE

(71) Anmelder: **BASF Aktiengesellschaft**
**Carl-Bosch-Strasse 38**
**D-6700 Ludwigshafen(DE)**

(72) Erfinder: **Perner, Thomas, Dr.**
**Berner Weg 24**
**D-6700 Ludwigshafen(DE)**
Erfinder: **Wistuba, Eckehardt, Dr.**
**Im Obergarten 7**
**D-6702 Bad Duerkheim 4(DE)**

(54) **Wässrige Dispersionen von Copolymerisaten, die Epoxidgruppen enthalten und deren Anwendung.**

(57) Die vorliegende Erfindung betrifft wäßrige Dispersionen von Copolymerisaten, die Epoxidgruppen enthalten, erhältlich durch Copolymerisation in wäßriger Phase von

A) 50 bis 96 Gew.% eines Vinylesters

B) 4 bis 50 Gew.% einer $\alpha,\beta$-monoolefinisch ungesättigten Epoxidverbindung

C) 0 bis 48 Gew.% eines $\alpha,\beta$-monoolefinisch ungesättigten Mono- oder Dicarbonsäureesters oder deren Gemische und

D) 0 bis 2 Gew.% mindestens einer weiteren $\alpha,\beta$-monoolefinisch ungesättigten Verbindung mit Carboxyl-, Sulfonat-, Phosphonat-, Phosphat-, Sulfonamid- oder Amid-Gruppen.

EP 0 346 728 A2

**Wäßrige Dispersionen von Copolymerisaten, die Epoxidgruppen enthalten und deren Anwendung**

Die vorliegende Erfindung betrifft wäßrige Dispersionen auf Basis von Vinylester-haltigen Polymerisaten, welche Epoxidgruppen aufweisen.

Die herkömmlichen Vinylester-haltigen Dispersionen (Vinylacetat, Vinylpropionat etc.) werden bevorzugt auf dem Gebiet der Anstrichmittel und Putze sowie als Zementmörtel-Zusätze eingesetzt. Vinylpropionathaltige Dispersionen zeichnen sich einerseits durch gute anwendungstechnische Eigenschaften wie Pigmentverträglichkeit, thixotropes Fließverhalten und Verfilmbarkeit aus, andererseits zeigen die mit diesen Dispersionen hergestellten Beschichtungen ungenügende Wasser- bzw. Alkalibeständigkeit, was sich in einer ungünstigen Verseifungstestzahl sowie relativ hohen Wasseraufnahmen (DIN 53 495) ausdrückt. Beide Faktoren führen zu einer schnelleren Verschmutzung bzw. Beschädigung der Beschichtung.

Eine deutliche Verbesserung der Wasserbeständigkeit von Beschichtungen aus Vinylpropionat-haltigen Dispersionen wird erreicht durch Zudosieren des Vinylpropionats mit unterschiedlicher Geschwindigkeit gemäß DE-A 3 437 920.

Die obengenannten Nachteile können ebenso umgangen werden durch Herstellung von Epoxidgruppen-haltigen Dispersionen, wobei die Epoxidgruppen gegebenenfalls nach der Dispersionsherstellung mit gegenüber Epoxidgruppen reaktiven Gruppierungen in der Weise umgesetzt werden, daß sich Vernetzungsstellen ausbilden können. Die Mitverwendung von Epoxidgruppen-haltigen Monomeren in Verbindungen mit Vinylestern wurde schon in mehreren Patenten beschrieben (JP-OS 78/011927, JP-OS 77/100533, JP-AS 70/11708).

In der Patentschrift JP-OS 78/011927 werden Emulsionspolymerisate aus 20 bis 98,7 Gew.% Acrylestern oder Vinylestern, 1,0 bis 20,0 Gew.% ethylenisch ungesättigten Epoxidgruppen-haltigen Monomeren, 0,3 bis 10 Gew.% eines Monomeren mit mindestens zwei polymerisierbaren ungesättigten Gruppierungen beschrieben. Zu diesen schon vorvernetzten Epoxidgruppen-haltigen Systemen wenden anschließend Polyamine oder OH-Gruppen-haltige Verbindungen gegeben.

Ebenso wird in der JP-OS 77/100533 die Vernetzung von Epoxidgruppen-haltigen Ethylen-Vinylacetat-Terpolymerisaten mit verschiedenen Verbindungsklassen (Polyamide, Polyamine) beschrieben, wobei Ethylen allerdings zwingend notwendig ist.

Die JP-AS 70/11708 behandelt Vinylpropionat-haltige Seifendispersionen, welche zusätzlich Epoxidgruppen-haltige Monomere sowie Säuregruppen-haltige ethylenisch ungesättigte Verbindungen enthalten. Eine nachträgliche Vernetzung wird hier nicht beschrieben.

Aufgabe der vorliegenden Erfindung war es, Vinylester-haltige Dispersionen zur Verfügung zu stellen, die gute Pigmentverträglichkeit, thixotropes Fließverhalten und gute Verfilmbarkeit aufweisen und mit denen Beschichtungen mit guter Wasser- und Alkalibeständigkeit hergestellt werden können.

Diese Aufgabe konnte gelöst werden durch wäßrige Dispersionen von Copolymerisaten, die Epoxidgruppen enthalten, erhältlich durch Copolymerisation in wäßriger Phase von

A) 50 bis 96 Gew.% eines Vinylesters

B) 4 bis 50 Gew.% einer $\alpha,\beta$-monoolefinisch ungesättigten Epoxidverbindung

C) 0 bis 48 Gew.% eines $\alpha,\beta$-monoolefinisch ungesättigten Mono- oder Dicarbonsäureesters oder deren Gemische und

D) 0 bis 2 Gew.% mindestens einer weiteren $\alpha,\beta$-monoolefinisch ungesättigten Verbindung mit Carboxyl-, Sulfonat-, Phosphonat-, Phosphat-, Sulfonamid- oder Amidgruppen.

Zu den Aufbaukomponenten ist folgendes auszuführen.

Als Aufbaukomponente (A) zur Herstellung der Copolymerisate werden 50 bis 96 Gew.%, bevorzugt 70 bis 95 Gew.%, besonders bevorzugt 90 bis 95 Gew.%, Vinylester von Carbonsäuren mit 1 bis 20 C-Atomen verwendet. Beispiele sind Vinylformiat, Vinylacetat, Vinylbutyrat, Vinylvalerat, Vinylpivalat, Vinyldecanoat, Vinyllaurat, Vinylstearat und Vinylversatat. Bevorzugt ist Vinylpropionat.

Als Aufbaukomponente (B) werden 4 bis 50 Gew.%, bevorzugt 5 bis 30 Gew.%, besonders bevorzugt 5 bis 10 Gew.%, $\alpha,\beta$-monoolefinisch ungesättigte Verbindungen verwendet, die eine Glycidylgruppe enthalten. Beispiele sind Glycidyl(meth)acrylat, (Meth)Allylglycidylether, 1,2-Epoxibutylacrylat, Glycidylcrotonat, 2,3-Epoxicyclopentylacrylat und 3,4-Epoxi-1-vinylcyclohexen. Bevorzugt sind Glycidylacrylat und Glycidylmethacrylat.

Als Aufbaukomponente (C) können 0 bis 48 Gew.% im Falle der Mitverwendung 5 bis 30 Gew.% Mono- und Dialkylester monoolefinisch ungesättigter Mono-und Dicarbonsäuren verwendet werden wie Ester der (Meth)Acrylsäure, Maleinsäure, Fumarsäure, Crotonsäure, Itaconsäure mit $C_1$- bis $C_{12}$-Alkanolen wie Methanol, Ethanol, Isopropanol, n-Propanol, n-, sec-, iso-, tert.-Butanol, 2-Ethylhexanol, Octanol und Dode-

2

canol. Geeignet sind auch ß-Hydroxyalkylester der genannten Säuren. Vorteilhaft verwendet man Methyl-(meth)acrylat, Ethyl(meth)acrylat, n-, iso-, tert.-Butyl(meth)acrylat, Lauryl(meth)acrylat, Ethylhexyl(meth)-acrylat, Hydroxyethyl(meth)acrylat, Maleinsäureisobutylester oder deren Gemische. Bevorzugt sind tert.-Butylacrylat und Maleinsäureisobutylester.

Als Aufbaukomponente (D) können zur Stabilisierung der Dispersionen 0 bis 2 Gew.% eines sogenannten Hilfsmonomeren mit stark polaren Gruppen wie $\alpha,\beta$-monoolefinische ungesättigte Verbindungen mit Carboxyl-, Sulfonat-, Phosphonat-, Phosphat-, Sulfonamid- oder Amid-Gruppen mitverwendet werden. Beispiele sind (Meth)Acrylsäure, Vinylsulfonat, (Meth)Acrylamid und Acrylamidopropansulfonsäure.

Die Herstellung der wäßrigen Dispersionen kann nach an sich bekannten Verfahren der Emulsionspolymerisation unter Verwendung der üblichen Emulgatoren erfolgen, die in einer Menge von 0,1 bis 10 Gew.%, bezogen auf die Monomeren, als anionische oder nicht-ionische Emulgier- oder Dispergiermittel oder als Gemische hiervon eingesetzt werden können. Beispiele anionischer Emulgatoren sind Fettsäuren, Harzsäuren, Fettalkoholsulfate, Alkylsulfonate, Hydroxyalkylsulfonate, Salze der Sulfobernsteinsäureester und sulfatierte Ethylenoxidaddukte von z.B. Alkylphenolen. Als nicht-ionogene Emulgatoren können z.B. die bekannten Umsetzungsprodukte des Ethylenoxids mit Fettalkoholen, wie Lauryl-, Myristil-, Cetyl-, Stearyl- und Oleylalkohol, mit Fettsäuren wie Laurin-, Myristin-, Palmitin-, Stearin- und Ölsäure sowie deren Amiden und Alkylphenolen, wie Isooctyl- und Dodecylphenol Anwendung finden, sowie ferner des Ethylenoxids mit veräthertem oder verestertem Sorbitmonostearat. Die als Beispiele angeführten Verbindungen sind pro mol meist mit 4 bis 60 oder mehr mol Ethylenoxid umgesetzt. Auch Block-Copolymere aus Ethylenoxid und Propylenoxid mit mindestens einem Mol Ethylenoxid können verwendet werden. Gegebenenfalls werden diese Emulgatoren in Kombination mit sog. Schutzkolloiden eingesetzt. Hier kommen u.a. in Frage Cellulosederivate und Vinylpyrrolidonderivate. Bevorzugt wird Hydroxyethylcellulose und teilverseiftes Polyvinylacetat mit einem Hydrolysegrad von 70 bis 99,8 %, bevorzugt 74 bis 95 % verwendet. Die Celluloseether besitzen Molgewichte von ca. 200.000, vorzugsweise von 40.000 bis 100.000.

Als Initiatoren eignen sich z.B. anorganische Peroxo-Verbindungen wie Wasserstoffperoxid, Natrium-, Kalium- oder Ammoniumperoxodisulfat, Peroxocarbonate, ferner organische Peroxoverbindungen wie Acylhydroperoxide, Diacylperoxide, Alkylhydroperoxide, Dialkylperoxide und Ester wie tert.-Butylperbenzoat. Die Initiatormenge beträgt im allgemeinen 0,01 bis 5 Gew.%, vorzugsweise 0,2 bis 1,0 % bezogen auf die Gesamtmenge der Monomeren.

Die als Beispiele angeführten anorganischen oder organischen Peroxoverbindungen können auch zusammen mit geeigneten Reduktionsmitteln, z.B. Schwefeldioxid, Alkalidisulfiten, Alkali- oder Ammoniumhydrogensulfiten, Thiosulfat, Dithionit und Formaldehydsulfoxylat, ferner Hydroxylaminhydrochlorid, Hydrazinsulfat, Eisen-(II)-sulfat, Zinn-(II)-chlorid, Titan-(III)-sulfat, Hydrochinon, Glucose und Ascorbinsäure eingesetzt sein, wobei in Gegenwart von kleinen Mengen Metallsalzen wie wasserlöslichen Mangan-, Eisen-, Kobalt- und/oder Nickel-Salzen gearbeitet werden kann.

Kettenübertragungsmittel wie z.B. Tetrachlormethan, Trichlorbrommethan, Tetrachlorethan, Methallylchlorid, niedere und höhere Alkohole, höhere Alkylmercaptane und Dialkylxanthogenate lassen sich bei der Polymerisation ebenfalls mitverwenden. Die Polymerisation wird im allgemeinen bei 20 bis 95° C durchgeführt, der pH-Wert kann dabei zwischen 1 und 9 liegen. Zweckmäßigerweise können noch geringe Mengen ($\sim$ 0,1 %) eines Puffers, z.B. Natriumhydrogencarbonat, Natriumacetat, Natriumhydrogenphosphat zugesetzt werden, um den pH je nach Initiatorsystem nicht allzu stark abfallen zu lassen (pH $\sim$ 4,0).

Die Zugabe der Monomeren erfolgt entweder in Form der reinen Monomere oder in Form einer wäßrigen Emulsion. Vorzugsweise kann ein Teil der Monomeren mit Emulgator vorgelegt (5 bis 20 Gew.%) und initiiert werden. Nach einer bestimmten Anpolymerisationszeit erfolgt die Zugabe von weiterem Monomer. Eine besonders bevorzugte Ausführungsform besteht in der Zugabe des epoxidgruppenhaltigen Monomers erst zu einem späteren Zeitpunkt der Polymerisation (Stufenreaktion).

Um die Wasserbeständigkeit von Filmen, die mit Hilfe der beschriebenen Dispersionen hergestellt werden können, weiter zu verbessern, können der Dispersion reaktive Vernetzer zugesetzt werden, die gegenüber Epoxidgruppen reaktive Gruppierungen aufweisen. Als reaktive Vernetzer können Ammoniak, primäre und sekundäre Amine bzw. Polyamine mit einer NH-Funktionalität $\geqq$ 2 eingesetzt werden, so z.B. $NH_3$, Hexamethylendiamin, Polyetheramine, Polyethylenimine (z.B. Polymin®-Typen, BASF AG). Ebenso kommen Poly.-tert. Amine bzw. primäre oder sekundäre Aminogruppen-haltige Verbindungen, welche zusätzlich tert. Aminogruppen enthalten, in Frage, z.B. Bis-(3-Aminopropyl)-methylamin, N,N,N',N'',N'''-Pentamethyldipropylentriamin, N,N,N',N'-Tetramethylhexamethylendiamin, Tetramethylbutandiamin. Tert. Aminogruppen können entweder selbst an Epoxide addieren oder die Addition von primären und sekundären Aminen katalysieren. Besonders geeignet sind Hydrazidgruppen-haltige Verbindungen, z.B. Adipinsäuredihydrazid oder Polyacrylsäurehydrazid. Letztgenannte Vernetzer besitzen gegenüber Aminen zum einen den Vorteil, daß sie die Viskosität der Dispersion nicht oder nur gering erhöhen und somit das Fließverhalten der Dispersion nur wenig verändern, zum anderen zeigen die mit Hydraziden nachbehandelten Proben keinerlei Vergilbung. Ebenso können eingesetzt werden Amidgruppen-haltige Polymere wie z.B. Polyacrylamid sowie niedermolekulare polyfunktionelle Amide wie z.B. Adipinsäurediamid. Weiterhin können Di- und Polycarbonsäuren wie Adipinsäure oder Polyacrylsäure Verwendung finden. Während Polyamine bei Raumtemperatur abreagieren, sollte die Reaktion mit Hydraziden, Polyamiden und Polycarbonsäuren bei 40 bis 80° C stattfinden. Je nach Anwendungszweck und Vernetzungsdichte werden 10 bis 300 % (bez. auf Äquivalente Epoxid) an Vernetzern eingesetzt. Bevorzugt sind Mengen von 50 bis 200 %.

Der Feststoffgehalt der erfindungsgemäßen Dispersionen beträgt im allgemeinen 40 bis 65 Gew.% vorzugsweise 45 bis 55 Gew.%. Sie sind insbesondere als Bindemittel für Anstrichmittel und Putze geeignet. Mit ihrer Hilfe können Kunstharz-gebundene Putze und Dispersionsfarben erhalten werden, mit denen verschmutzungsresistente Beschichtungen z.B. auf Holz, mineralischen Untergründen sowie Dämm-Materialien, wie geschäumtes Polystyrol, hergestellt werden können, die bei Bewitterung besonders gute Farbtonhaltung aufweisen. Dabei können die üblichen Hilfsstoffe, Füllstoffe und Pigmente mitverwendet werden, die mit Hilfe der üblichen Mischvorrichtungen in die Dispersionen eingearbeitet werden. Die Putze und Anstrichmittel können in üblicher Weise verarbeitet werden. Die erfindungsgemäßen Vinylpropionat-Copolymerisat-Dispersionen können aber auch als alleinige Bindemittel für Putze und Anstrichstoffe eingesetzt werden.

Beispiel 1

In ein mit $N_2$ gespültes Polymerisationsgefäß wurden 850 g Wasser, 13,3 g Natrosol® 250 IR (Fa. Hercules, Hydroxyethylcellulose), 90 g einer 20 Gew.%igen Lösung ethoxylierten p-Isooctylphenols mit dem Ethoxylierungsgrad 25, 55 g einer 35 gew.%igen Lösung eines sulfatierten ethoxylierten p-Isooctylphenols mit dem Ethoxylierungsgrad 25, 2,6 g Butenol, 2,1 g NaHCO₃ sowie 85 g Vinylpropionat vorgelegt. Nach dem Zulauf von 0,27 g Natriumpersulfat in 9,8 g $H_2O$ wurde für 10 min bei 80° C anpolymerisiert. Anschließend wurden 765 g Vinylpropionat, 150 g tert.-Butylacrylat, 50 g Glycidylmethacrylat und 2,6 g Acrylsäure über 3,5 h bei 80° C zusammen mit 2,4 g Natriumpersulfat in 87,8 g Wasser zudosiert. Nach Zulaufende wurde für 1,0 h bei 85° C nachpolymerisiert. Es wurde eine 50 gew.%ige Dispersion erhalten.

Beispiele 2 und 3

Die Versuchsdurchführung erfolgte analog Beispiel 1 nur mit anderem Monomerverhältnis (s. Tabelle 1).

Beispiel 4

In ein mit $N_2$ gespültes Polymerisationsgefäß wurden 960 g Wasser, 19,9 g Natrosol® 250 IR (Fa. Hercules), 90 g einer 20 gew.%igen Lösung eines ethoxylierten p-Isooctylphenols mit dem Ethoxylierungsgrad 25, 55,5 g einer 35 Gew.%igen Losung mit dem Ethoxylierungsgrad 25, 3,9 g Butenol, 3,15 g NaHCO₃ sowie 135 g Vinylpropionat vorgelegt. Nach dem Zulauf von 0,5 g Natriumpersulfat in 16 g Wasser wurde für 10 min bei 80° C anpolymerisiert. Anschließend wurden 1215 g Vinylpropionat über 4 h zusammen mit 3,6 g Natriumpersulfat in 115 g Wasser zudosiert. Nach Zulaufende wurde eine Emulsion aus 75 g Glycidylmethacrylat, 75 g tert.-Butylacrylat, 3,9 g Acrylsäure, 45 g einer 20 gew.%igen Lösung eines ethoxylierten p-Isooctylphenols, 28 g einer 35 gew.%igen Lösung eines sulfatierten ethoxylierten p-Isooctylphenols mit dem Ethoxylierungsgrad 25 zusammen mit 0,9 g Natriumpersulfat in 29 g Wasser über 1 h bei 80° C zugegeben. Nach Zulaufende wurde für 1,0 h bei 85° C nachpolymerisiert. Es wurde eine 50 gew.%ige Dispersion erhalten.

Beispiel 5

In ein mit $N_2$ gespültes Polymerisationsgefäß wurden 580 g Wasser, 10,0 g Natrosol® 250 IR (Fa. Hercules), 150 g einer 20 gew.%igen Lösung eines ethoxylierten p-Isooctylphenols mit dem Ethoxylierungsgrad 25, 14,0 g einer 35 gew.%igen Losung eines sulfatierten ethoxylierten p-Isooctyl phenols mit dem Ethoxylierungsgrad 25, 0,8 g Butenol, 3,6 g NaHCO₃ sowie 90 g Vinylpropionat vorgelegt. Nach dem Zulauf

4

von 0,5 g Natriumpersulfat in 16 g Wasser wurde für 10 min bei 80°C anpolymerisiert. Anschließend wurden 810 g Vinylprcpionat, 100 g Glycidylmethacrylat und 2,5 g Acrylsäure über 3 h bei 80°C zusammen mit 4,5 g Natriumpersulfat in 144 g Wasser zudosiert. Nach Zulaufende wurde für 1,0 h bei 85°C nachpolymerisiert. Es wurde eine 55 gew.%ige Dispersion erhalten.

## Beispiel 6

Versuchsdurchführung analog Versuch 4 nur mit Verwendung von Polyvinylalkohol anstelle von Hydroxyethylcellulose.

## Beispiel 7

Die Versuchsdurchführung erfolgte analog Versuch 1 aber mit anderer Monomerzusammensetzung (s. Tabelle 1).

Tabelle 1

| Beispiel | Monomerzusammensetzung [Gew.-%] | | | Schutzkolloid | Feststoffgehalt [Gew.%] | pH | LD [%] | $n(80\ s^{-1})$ [mPas] |
|---|---|---|---|---|---|---|---|---|
| 1 | 85 VPr/10 | t-BA/5 | GMA/0, 26 AS | Natrosol 250 IR | 50 | 4,5 | 49 | 354 |
| 2 | 75 VPr/20 | t-BA/5 | GMA/0, 26 AS | Natrosol 250 IR | 50 | 4,5 | 36 | 277 |
| 3 | 90 VPr/5 | t-BA/5 | GMA/0, 26 AS | Natrosol 250 IR | 50 | 4,8 | 50 | 423 |
| 4 | 90 VPr/5 | t-BA/5 | GMA/0, 26 AS | Natrosol 250 IR | 50 | 4,3 | 52 | 554 |
| 5 | 90 VPr/10 | | GMA/0, 26 AS | Natrosol 250 IR | 55 | 4,4 | 48 | 124 |
| 6 | 90 VPr/10 | | GMA/0, 26 AS | Ertivinol 30-92 | 55 | 4,6 | 40 | 349 |
| 7 | 75 VPr/25 | t-BA/0, | 26 AS | Natrosol 250 IR | 50 | 4,5 | 37 | 307 |
| 8 | 90 VPr/10 | t-BA/0, | 26 AS | Natrosol 250 IR | 50 | 2,3 | 55 | 457 |

VPr = Vinylpropionat

t-BA = tert.-Butylacrylat

GMA = Glycidylmethacrylat

AS = Acrylsäure

Natrosol 250 IR: Hydroxyethylcellulose der Fa. Hercules (Substitutionsgrad: 2,5)

Ertivinol 30-92: Polyvinylalkohol der Fa. Hoechst (30 mPas, Verseifungsgrad: 92 %)

LD: Lichtdurchlässigkeit

Tabelle 2

| Beispiel | Abmischung mit [Gew.%] | | | Wasseraufnahme[2] nach 24 Stunden [Gew.%] | | |
|---|---|---|---|---|---|---|
| | ADDH | / | HDA[1] | | | |
| 1 | 2,5 | / | 1,2 | 13,0 | / | 4,5 |
| 2 | 2,5 | / | 1,2 | 12,5 | / | 5,0 |
| 3 | 2,5 | / | 1,2 | 13,5 | / | 3,0 |
| 4 | 2,5 | / | 1,2 | 8,0 | / | 4,0 |
| 5 | 5,0 | / | 2,4 | 14,5 | / | 6,0 |
| 6 | 5,0 | / | 2,4 | 14,0 | / | 6,5 |
| 7 | - | | | 25 | | |
| 8 | - | | | 46 | | |

[1] Zusatz von Adipinsäuredihydrazid (ADDH) bzw. Hexamethylendiamin (HDA)
[2] nach DIN 53 495

**Ansprüche**

1. Wäßrige Dispersionen von Copolymerisaten, die Epoxidgruppen enthalten, erhältlich durch Copolymerisation in wäßriger Phase von

A) 50 bis 96 Gew.% eines Vinylesters

B) 4 bis 50 Gew.% einer α,ß-monoolefinisch ungesättigten Epoxidverbindung

C) 0 bis 48 Gew.% eines α,ß-monoolefinisch ungesättigten Mono- oder Dicarbonsäureesters oder deren Gemische und

D) 0 bis 2 Gew.% mindestens einer weiteren α,ß-monoolefinisch ungesättigten Verbindung mit Carboxyl-, Sulfonat-, Phosphonat-, Phosphat-, Sulfonamid- oder Amidgruppen.

2. Dispersionen nach Anspruch 1, erhältlich unter Verwendung von Vinylacetat, Vinylformiat, Vinyllaurat, Vinylversatat oder deren Gemische als Aufbaukomponente (A).

3. Dispersionen nach Anspruch 1 oder 2, erhältlich unter Verwendung von (Meth)Allylglycidylether, 1,2-Epoxybutylacrylat oder Glycidylcrotonat oder deren Gemische als Aufbaukomponente (B).

4. Dispersionen nach einem der Ansprüche 1 bis 3, erhältlich unter Verwendung von Methyl(meth)acrylat, Ethyl(meth)acrylat, n-, iso-, tert.-Butyl(meth)acrylat, Lauryl(meth)acrylat, Ethylhexyl(meth)acrylat, Hydroxyethyl(meth)acrylat, Maleinsäureisobutylester oder deren Gemische als Aufbaukomponente (C).

5. Dispersionen nach einem der Ansprüche 1 bis 4, erhältlich unter Verwendung von (Meth)Acrylsäure, Vinylsulfonsäure oder (Meth)acrylamid oder deren Gemische als Aufbaukomponente (D).

6. Dispersionen nach einem der Ansprüche 1 bis 5, denen gegenüber Epoxidgruppen reaktive Vernetzer zugesetzt wurden.

7. Dispersionen nach einem der Ansprüche 1 bis 6, denen Polyamine oder Polyhydrazide als Vernetzer zugesetzt wurden.

8. Dispersionen nach einem der Ansprüche 1 bis 7, denen Füllstoffe, Pigmente und weitere Hilfs- oder Zusatzstoffe zugesetzt wurden.

9. Verwendung der Dispersionen gemäß einem der Ansprüche 1 bis 8 zur Herstellung von Anstrichmitteln, Putzen oder Zementmörtel.

10. Anstrichmittel, enthaltend die Dispersionen gemäß einem der Ansprüche 1 bis 8.